# NEW EUROPEAN PATENT SPECIFICATION

(11) **EP 1 820 632 B2**
(45) Date of publication and mention of the opposition decision: **13.07.2022**
(45) Mention of the grant of the patent: 28.07.2010
(21) Application number: 07388009.8
(22) Date of filing: 20.02.2007
(51) Int. Cl.: B31B 1/88, B31B 1/16, B31B 1/74

(54) **Method and system for manufacturing a packaging unit**
Verfahren und Maschine zur Herstellung von Verpackungszuschnitten
Procédé et machine pour fabriquer des découpes d'emballage

(30) Priority: 21.02.2006 DK 200600246
(43) Date of publication of application: 22.08.2007
(73) Proprietor: VEGA S.r.l., 20100 Milano (IT)
(72) Inventor: Christensen, Bent, 5620 Glamsbjerg (DK)
(74) Representative: Pezzoli, Ennio

(56) References cited:
- EP-A1- 0 885 809
- DE-A1- 2 658 887
- DE-U1-202005 002 085
- DE-U1-202005 017 869
- FR-A1- 2 821 290
- FR-A1- 2 843 911
- GB-A- 1 060 313
- JP-A- 2000 025 327
- US-A- 4 759 741

## Description

The present invention relates to a method of manufacturing a packaging unit with applied embossing/Braille to forming a closed packaging, comprising to provide at least one of the side faces of the packaging unit with embossing/Braille lettering. Moreover the invention relates to a system for exercising the method.

In connection with the embossing of packagings such as cardboard boxes for use in the packaging of goods or preparations, such as medicine, where it is desirable/required, for the sake of the visually impaired or blind people, to provide the packaging with a written note in Braille lettering, also known as Braille-printing or relief printing. Today, it is known to provide such relief printing during the production process, where, typically, it takes place in connection with the punching of a cardboard packaging unit, where a printing matrix featuring the written notice in Braille is simultaneously arranged in each of the press matrices used for pressing the cardboard packaging units from a packaging bulk in the form of a roll or sheet of cardboard, to the effect that a large number is punched at the same time, typically between 1 and 25 pieces, depending on the size of the packaging unit and the capacity of the punching tool. Thus punching and embossment is made in one and the same process step prior to the packaging units proceeding in the production course to folding and adhesive joining.

This allows for a very simple production process, but at the same time it makes it possible for errors to occur in the production procedure, precisely due to the application of the text in Braille taking place along with the punching of the items at a stage where no other information has yet been applied. Precisely in view of the fact that a large number of packaging units are punched at a time, it also means that an embossment matrix bearing the relevant, identical writing is to be arranged in every press matrix.

Precisely due to the fact that the conversion of production process requires exchange of embossment matrix and, at the same time, persons skilled in Braille are most often not present, there is a risk of a wrong embossment matrix being deployed on the punching tool, and that a packaging is consequently provided with wrong embossing, and, likewise, the risk of mixing up different types of embossment matrices is increased. This may mean that erroneous embossing is applied to the packaging unit which may give rise to erroneous medication of the person who depends on the information in Braille when the packaging is used for prescription drugs. It is therefore the object of the invention to provide a method of manufacturing a packaging unit with applied embossment/Braille lettering and further to provide a system by which the method can be executed.

This is obtained by the invention in accordance with claim 1 and by the system in accordance with claim 9. Hereby it is accomplished that now it is possible to provide a packaging unit with information embossed/in Braille in a simple and reliable way, the risk of mixing up different types of embossing matrices now being avoided in that the all the packaging units are now provided with embossing by being conveyed between the same two rollers and are hence provided with embossing/Braille in connection with the folding/adhesive joining.

According to an advantageous embodiment of the invention said first roller is configured for receiving an embossing matrix, said embossing matrix being provided with radially protruding pins for forming one or more embossings in Braille. Hereby it is accomplished that it is possible to mount matrices with different textual information depending on the concrete embossing to be displayed.

Advantageously said second roller is configured with a circular surface that is provided with a plurality of circular cavities that coincide with said pins to the effect that said cavities and pins engage each other when the rollers rotate, and thereby the cavities form stops for the packaging unit when the pins perforate it. Hereby a well-defined stop is provided for the pins on the matrix that form the desired embossing(s).

Other advantageous embodiments of the invention will appear from the dependent claims.

The invention will now be explained based on the drawing, wherein
Figure 1 is a side view of a system comprising an embossing device according to the invention;
Figure 2 shows the system of Figure 1, in a front view;
Figure 3 shows the system, in a top view;
Figure 4 is a side view of a roller with embossing matrices configured around the circular surface; and
Figure 5 is a side view of a roller configured for cooperating with the roller shown in Figure 5a.

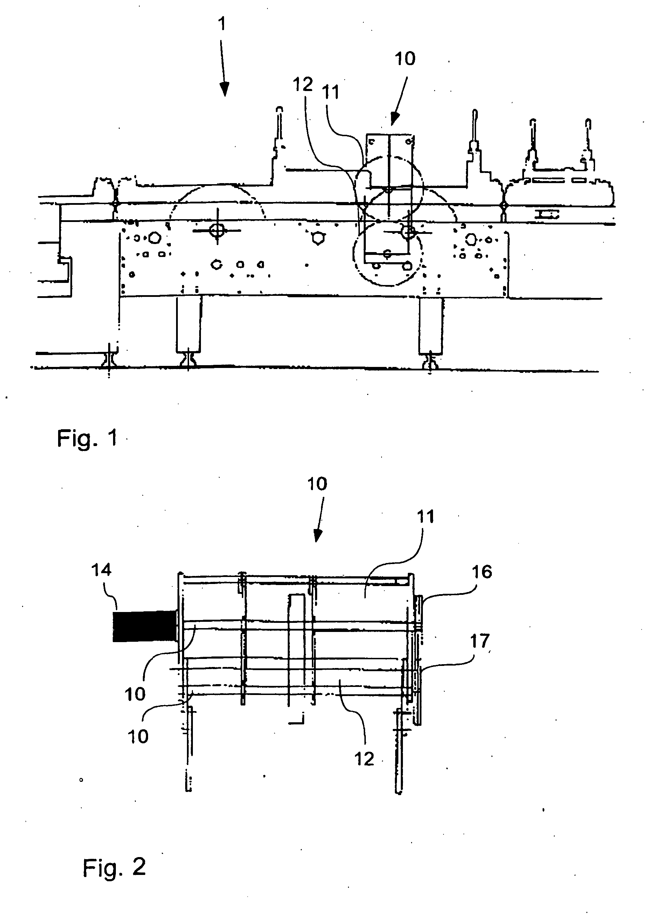

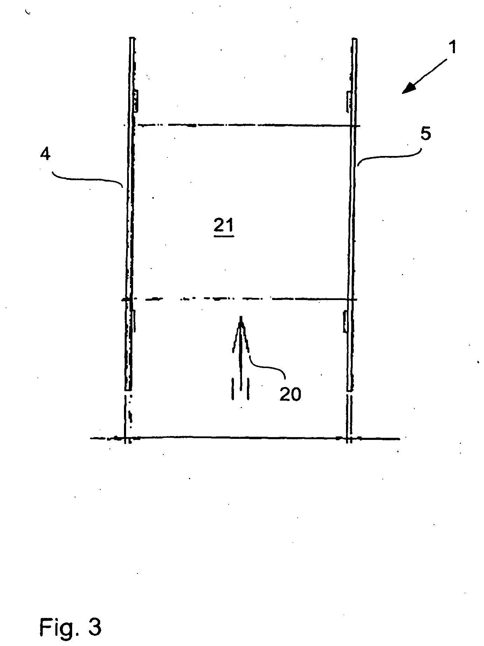

In the following reference is made to Figures 1-3 that show a part of a folding/adhering apparatus for a system 1 for the manufacture of packaging units, comprising an embossing device according to the invention. The system 1 further comprises a shearing apparatus (not shown) for punching or cutting the packaging unit from a packaging bulk in the form of a roll or sheet of fibre-containing material, such as cardboard or paper. Moreover a conveyor 21 is configured that has a direction of conveyance 20, such as ia an endless conveyor configured between two side edges 4, 5 and which conveys the punched-out packaging units through the system 1.

An embossing device 10 comprising two rollers 11, 12 arranged transversely to the direction of conveyance 20 and configured in a vertical plane opposite each other will appear particularly clearly from figure 1. Rollers 11, 12 are configured to cooperate with each other, said rollers 11, 12 being rotatably connected by means of toothed wheels 16, 17 at the ends of the rotation shafts 10 of the rollers and are driven by a step motor 14 mounted at an end of one of the shafts 10. The one, and preferably the lower one, of the rollers 12 is configured with a circular surface 12a which is provided with a plurality of circular, evenly distributed cavities (not shown) and configured for cooperating with complementary, protruding pins on a matrix 7 mounted on a surface 11 a on the roller 11. Thus, said cavities and pins engage each other when the rollers rotate, whereby the cavities form stops for the packaging unit when the pins emboss the packaging unit.

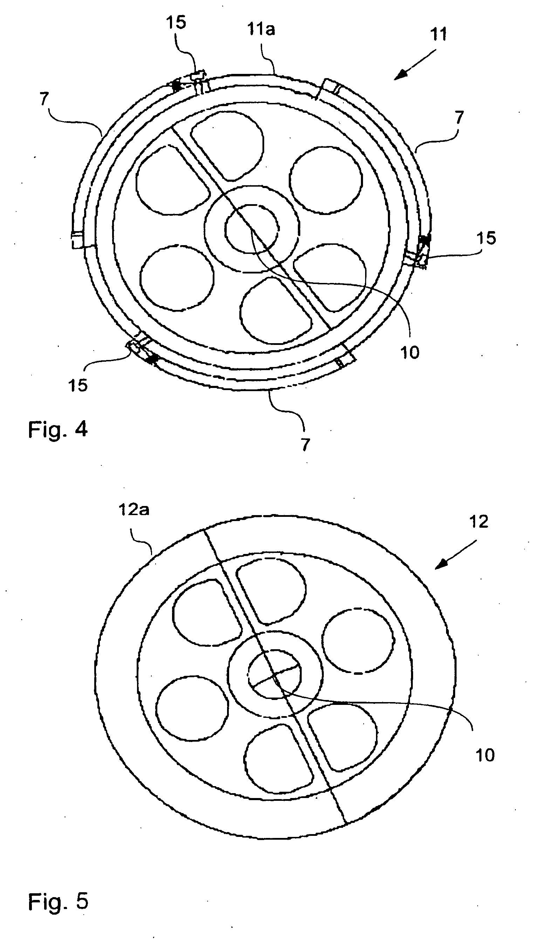

Figures 4 and 5 are cross-sectional views of the lower and the upper rollers 11, 12. Rollers 11, 12 are configured with an axis of rotation 10 and a circular surface 11a, 12a that extend with the same radius into said axis of rotation 10. The one roller, designated by 11, which will preferably be the upper one of the two rollers is provided with three evenly distributed embossing matrices 7 that are secured to the top face 11 a of the roller 11 in a fixture 15 configured therefor. This means that, in case three matrices are arranged around the surface, the fixture is configured with 120° between each.

The method of manufacturing a packaging unit with applied embossing/Braille for forming a closed packaging will be described in further detail in the following in respect of those parts of the method that relate to the process steps immediately before and after the step in which the packaging unit is provided with an embossing.

The packaging unit will preferably be provided by punching or cutting from a packaging bulk in the form of a roll or a sheet in an automated punching apparatus, following which the packaging unit is conveyed on in the direction of conveyance.

The packaging unit is conveyed through the folding/adhering apparatus and thereby enters between the upper and the lower rollers 11, 12, while simultaneously embossing/Braille is applied on at least one of the side faces of the packaging unit; it being understood that the rate of conveyance of the conveyor and the speed of rotation of the rollers 11, 12 are determined with due regard to the packaging units to be provided with information embossed/in Braille.

If it was not done already at an earlier stage, the packaging object may now preferably be provided with packaging printing, such as a text and/or graphic information on the side(s) of the finished packaging that is/are intended for facing outwards on the assembled and closed packaging. Then the packaging unit can be conveyed to subsequent processes in the manufacturing process, if any, prior to the packaging unit being finally packed along with other, corresponding packaging units, optionally for shipment.

According to one feature of the method, the packaging unit will further be provided with a code, such as a bar code, for identifying the packaging unit. Such bar code serves to identify the packaging unit in question and hence also the packaging type.

The bar code now applied onto the packaging unit is read by an optical reader and the signal (A) generated thereby is transmitted to a computer unit, where the signal is compared to a corresponding signal (B) generated by reading of another code, such as a bar code, arranged on the embossing matrix. These two signals (A) and (B) are compared in the computer unit, where the quality of the applied embossing is evaluated based on a match between said signals. This also means that it is possible to check whether the embossing/Braille applied onto the packaging unit also corresponds to the embossing/Braille on the matrix in question.

If there is a mismatch between signals (A) and (B), the computer will make a choice whether the packaging unit is to be discarded and whether a visual or acoustic signal is optionally to be emitted to draw attention to the mismatch.

Above, the invention was described on the basis of three embossing matrices being configured around the roller. However, it will be understood that, in accordance with the invention, one, two or more embossing matrices may be configured around the roller, and, likewise, the roller could be provided with fixed printing types in embossing/Braille, meaning that the entire roller is to be exchanged when the text is to be amended. Moreover the invention was described on the basis of the packaging unit being capable of being perforated by the embossing of the Braille, but scenarios where the embossing/Braille is provided as local elevations in the packaging unit are also comprised by the scope of protection.

## Claims

1. A method of manufacturing a packaging unit with applied embossing of a Braille lettering for forming a closed packaging, comprising the following steps:
- to provide the packaging unit by punching or cutting of a packaging bulk to have the packaging unit punched-out therefrom, said packaging bulk being in the form of a roll or a sheet;
- to provide at least one of the side faces of the packaging unit after the punching or cutting thereof with at least one embossing of a Braille lettering by conveying the packaging unit between a first roller (11) and a second roller (12) configured for cooperating with each other, said first roller (11) and said second roller (12) being configured with complementary means for providing at least one embossing of a Braille lettering;
- folding and adhesive joining of the embossed packaging unit.

2. A method according to claim 1, **characterised in that** said first roller (11) is configured for receiving an embossing matrix (7), said embossing matrix (7) being provided with radially protruding pins for forming one or more embossing of a Braille lettering.

3. A method according to claim 1, **characterised in that** said second roller (12) is configured with a circular surface (12a) which is provided with a plurality of circular cavities that coincide with said pins, whereby said cavities and pins engage each other at when the rollers rotate, and the cavities thereby form stops for the packaging unit when the pins perforate it.

4. A method according to any one of the preceding claims, **characterised in that**, on a surface, the packaging unit is provided with a packaging printing in the form of text and/or graphic information.

5. A method according to any one of the preceding claims, **characterised in that** the packaging unit is further provided with a code for identifying the packaging unit.

6. A method according to any one of the preceding claims, **characterised in that** said code on the packaging unit is read by an optical reader; and that the signal generated thereby is transmitted to a computer unit, wherein the signal is compared to a corresponding signal generated by reading of a code on the embossing matrix; and that the quality of the applied embossing is evaluated based on a match between said signals.

7. A method according to claim 6, **characterised in that** the packaging unit is discarded if there is a mismatch between said signals.

8. A method according to claims 5 or 6, **characterised in that** the code is a bar code.

9. A system (1) for manufacturing a packaging unit with applied embossing of a Braille lettering for forming a closed packaging, comprising:
- a shearing device for punching or cutting a packaging unit from a packaging bulk to have the packaging unit punched-out therefrom, said packaging bulk being in the form of a roll or a sheet;
- a folding and adhering apparatus;
- a conveyor (21) such as an endless conveyor belt with a direction of conveyance (20) for conveying the packaging unit through the system to a discharge position, where the packaging units are discharged;
**characterised in** further comprising an embossing device comprising a first and a second roller (11, 12) configured for cooperating with each other, said first roller (11) and said second roller (12) being configured with complementary means for providing embossing of a Braille lettering on a packaging unit after the punching or cutting thereof.

10. A system according to claim 9, **characterised in that** said first roller (11) is configured for receiving one or more embossing matrices (7), said embossing matrix (7) being provided with radially protruding pins for forming one or more embossing of a Braille lettering.

11. A system according to claim 10, **characterised in that** said second roller (12) is configured with a circular surface (12a) with a plurality of circular cavities that coincide with said pins to the effect that said cavities and pins engage each other when the rollers rotate, and the cavities thereby form stops for the packaging unit when the pins perforate it.

## Patentansprüche

1. Verfahren zur Herstellung einer Verpackungseinheit mit aufgebrachter Prägung einer Braillebeschriftung zum Bilden einer geschlossenen Verpackung, wobei das Verfahren folgende Schritte aufweist:
- Bereitstellen der Verpackungseinheit durch Stanzen oder Schneiden eines Verpackungsmaterialguts, aus dem die Verpackungseinheit auszustanzen ist, wobei das Verpackungsmaterialgut in Form einer Rolle oder eines Bogens vorliegt;
- Versehen mindestens einer der Seitenflächen der Verpackungseinheit nach dem Stanzen oder Schneiden derselben mit mindestens einer Prägung einer Braillebeschriftung, indem die Verpackungseinheit zwischen einer ersten Walze (11) und einer zweiten Walze (12) befördert wird, die zum Zusammenwirken miteinander ausgebildet sind, wobei die erste Walze (11) und die zweite Walze (12) mit komplementären Mitteln zum Bereitstellen mindestens einer Prägung einer Braillebeschriftung ausgebildet sind;
- Falten und haftendes Zusammenfügen der geprägten Verpackungseinheit.

2. Verfahren nach Anspruch 1,
**dadurch gekennzeichnet, dass** die erste Walze (11) zum Aufnehmen einer Prägematrix (7) ausgebildet ist, wobei die Prägematrix (7) mit radial hervorstehenden Stiften zum Bilden einer oder mehrerer Prägungen einer Braillebeschriftung versehen ist.

3. Verfahren nach Anspruch 1,
**dadurch gekennzeichnet, dass** die zweite Walze (12) mit einer kreisförmigen Oberfläche (12a) ausgebildet ist, die mit einer Mehrzahl von kreisförmigen Vertiefungen versehen ist, die mit den Stiften zusammentreffen, wodurch die Vertiefungen und Stifte beim Drehen der Walzen ineinandergreifen und die Vertiefungen dadurch Anschläge für die Verpackungseinheit bilden, wenn die Stifte diese perforieren.

4. Verfahren nach einem der vorhergehenden Ansprüche,
**dadurch gekennzeichnet, dass** die Verpackungseinheit auf einer Oberfläche mit einer Verpackungsbedruckung in Form von Text und/oder grafischer Information versehen wird.

5. Verfahren nach einem der vorhergehenden Ansprüche,
**dadurch gekennzeichnet, dass** die Verpackungseinheit ferner mit einem Code zur Identifizierung der Verpackungseinheit versehen wird.

6. Verfahren nach einem der vorhergehenden Ansprüche,
**dadurch gekennzeichnet, dass** der Code auf der Verpackungseinheit von einem optischen Lesegerät gelesen wird; und dass das dadurch erzeugte Signal an eine Computereinheit übermittelt wird, wo das Signal mit einem entsprechenden Signal verglichen wird, das durch Lesen eines Codes auf der Prägematrix erzeugt wird; und dass die Qualität der aufgebrachten Prägung auf der Basis einer Übereinstimmung zwischen den Signalen bewertet wird.

7. Verfahren nach Anspruch 6,
**dadurch gekennzeichnet, dass** die Verpackungseinheit verworfen wird, wenn eine Nichtübereinstimmung zwischen den Signalen vorhanden ist.

8. Verfahren nach Anspruch 5 oder 6,
**dadurch gekennzeichnet, dass** der Code ein Strichcode ist.

9. System (1) zur Herstellung einer Verpackungseinheit mit aufgebrachter Prägung einer Braillebeschriftung zum Bilden einer geschlossenen Verpackung, aufweisend:
- eine Schervorrichtung zum Stanzen oder Schneiden einer Verpackungseinheit aus einem Verpackungsmaterialgut, aus dem die Verpackungseinheit auszustanzen ist, wobei das Verpackungsmaterialgut in Form einer Rolle oder eines Bogens vorliegt;
- eine Falt- und Klebevorrichtung;
- eine Fördereinrichtung (21), wie ein Endlos-Förderband, mit einer Förderrichtung (20) zum Fördern der Verpackungseinheit durch das System zu einer Ausgabeposition, wo die Verpackungseinheiten ausgegeben werden;
**dadurch gekennzeichnet, dass** ferner eine Prägevorrichtung vorhanden ist, die eine erste und eine zweite Walze (11, 12) aufweist, die zum Zusammenwirken miteinander ausgebildet sind, wobei die erste Walze (11) und die zweite Walze (12) mit komplementären Mitteln zum Bereitstellen einer Prägung einer Braillebeschriftung auf einer Verpackungseinheit nach dem Stanzen oder Schneiden derselben ausgebildet sind.

10. System nach Anspruch 9,
**dadurch gekennzeichnet, dass** die erste Walze (11) zum Aufnehmen einer oder mehrerer Prägematrices (7) ausgebildet ist, wobei die Prägematrix (7) mit radial hervorstehenden Stiften zum Bilden einer oder mehrerer Prägungen einer Braillebeschriftung versehen ist.

11. System nach Anspruch 10,
**dadurch gekennzeichnet, dass** die zweite Walze (12) mit einer kreisförmigen Oberfläche (12a) mit einer Mehrzahl von kreisförmigen Vertiefungen ausgebildet ist, die mit den Stiften zusammentreffen, so dass die Vertiefungen und Stifte ineinander eingreifen, wenn sich die Walzen drehen, und die Vertiefungen dadurch Anschläge für die Verpackungseinheit bilden, wenn die Stifte diese perforieren.

## Revendications

1. Méthode de fabrication d'un emballage portant une inscription en braille appliquée par embossage afin de former un emballage fermé, comprenant les étapes suivantes:
- obtention de l'emballage par poinçonnage ou découpe d'un matériau d'emballage brut afin d'avoir l'emballage découpé à partir de celui-ci, sous forme de rouleau ou de feuille;
- réalisation sur au moins l'une des faces latérales de l'emballage après le poinçonnage ou découpe de celui-ci d'au moins une inscription en braille par embossage en faisant passer l'emballage entre un premier rouleau (11) et un deuxième rouleau (12) configurés pour fonctionner l'un avec l'autre, ledit premier rouleau (11) et ledit deuxième rouleau (12) étant munis de moyens complémentaires pour réaliser au moins une inscription en braille par embossage ;
- pliage et assemblage par collage de l'emballage embossé.

2. Méthode selon la revendication 1, **caractérisée en ce que** ledit premier rouleau (11) est configuré pour recevoir une matrice d'embossage (7), ladite matrice d'embossage (7) étant munie d'ergots saillant radialement pour réaliser une ou plusieurs inscriptions en braille par embossage.

3. Méthode selon la revendication 1, **caractérisée en ce que** ledit deuxième rouleau (12) est configuré avec une surface circulaire (12a) munie de plusieurs cavités circulaires qui coïncident avec lesdits ergots, où lesdites cavités et lesdits ergots s'engagent les uns dans les autres lors de la rotation des rouleaux, si bien que les cavités forment des butées pour l'emballage quand les ergots le perforent.

4. Méthode selon l'une quelconque des revendications précédentes, **caractérisée en ce qu'**une surface de l'emballage reçoit une impression d'emballage sous forme d'information textuelle et/ou graphique.

5. Méthode selon l'une quelconque des revendications précédentes, **caractérisée en ce que** l'emballage reçoit également un code destiné à identifier l'emballage.

6. Méthode selon l'une quelconque des revendications précédentes, **caractérisée en ce que** ledit code sur l'emballage est lu par un lecteur optique ; et **en ce que** le signal ainsi généré est transmis à un ordinateur, où le signal est comparé à un signal correspondant généré par la lecture d'un code sur la matrice d'embossage ; et **en ce que** la qualité de l'embossage appliqué est évaluée d'après la concordance entre lesdits signaux.

7. Méthode selon la revendication 6, **caractérisée en ce que** l'emballage est mis au rebut en cas de non-concordance entre lesdits signaux.

8. Méthode selon les revendications 5 ou 6, **caractérisée en ce que** ledit code est un code-barres.

9. Système (1) de fabrication d'un emballage portant une inscription en braille appliquée par embossage afin de former un emballage fermé, comprenant :
- un dispositif de cisaillement pour poinçonner ou découper un emballage dans un matériau d'emballage brut afin d'avoir l'emballage découpé à partir de celui-ci, sous forme de rouleau ou de feuille ;
- un appareil de pliage et de collage ;
- un convoyeur (21) tel qu'un convoyeur à bande continue dont la direction de transport (20) permet de faire passer l'emballage au travers du système jusqu'à une position de déchargement, où les emballages sont déchargés ;
**caractérisé en ce qu'**il comprend également un dispositif d'embossage comprenant un premier et un deuxième rouleau (11, 12) configurés pour fonctionner l'un avec l'autre, ledit premier rouleau (11) et ledit deuxième rouleau (12) étant munis de moyens complémentaires pour réaliser une inscription en braille par embossage sur un emballage après le poinçonnage ou découpe de celui-ci.

10. Système selon la revendication 9, **caractérisé en ce que** ledit premier rouleau (11) est configuré pour recevoir une ou plusieurs matrices d'embossage (7), lesdites matrices d'embossage (7) étant munies d'ergots saillant radialement pour réaliser une ou plusieurs inscriptions en braille par embossage.

11. Système selon la revendication 10, **caractérisé en ce que** ledit deuxième rouleau (12) est configuré avec une surface circulaire (12a) munie de plusieurs cavités circulaires qui coïncident avec lesdits ergots afin que lesdites cavités et lesdits ergots s'engagent les uns dans les autres lors de la rotation des rouleaux, si bien que les cavités forment des butées pour l'emballage quand les ergots le perforent.
